# EUROPÄISCHE PATENTSCHRIFT

(11) **EP 2 682 537 B1**
(45) Veröffentlichungstag und Bekanntmachung des Hinweises auf die Patenterteilung: **01.01.2020**
(21) Anmeldenummer: 13169599.1
(22) Anmeldetag: 29.05.2013
(51) Int. Cl.: E04C 2/20, E04C 2/32

(54) **Kernschicht für ein Sandwichverbundbauteil, Sandwichverbundbauteil und Verfahren zur Herstellung eines Sandwichverbundbauteils**
Core layer for a sandwich composite component, sandwich composite component and method for producing a sandwich composite component
Couche noyau pour un élément composite de type sandwich, élément composite de type sandwich et procédé de fabrication d'un élément composite de type sandwich

(30) Priorität: 05.07.2012 DE 102012211765
(43) Veröffentlichungstag der Anmeldung: 08.01.2014
(73) Patentinhaber: Gaugler & Lutz oHG, 73432 Aalen-Ebnat (DE)
(72) Erfinder: Lutz, Roland, 73433 Aalen-Wasseralfingen (DE)
(74) Vertreter: Lorenz, Markus

(56) Entgegenhaltungen:
- EP-A1- 1 393 892
- EP-A1- 1 821 271
- DE-A1-102010 002 131
- DE-U1- 29 616 418
- FR-A1- 2 562 837
- GB-A- 684 092
- US-A- 2 454 175
- US-A1- 2011 250 384

## Beschreibung

Die Erfindung betrifft eine Kernschicht gemäß dem Oberbegriff des Anspruchs 1, ein Sandwichverbundbauteil gemäß dem Oberbegriff des Anspruchs sowie ein Verfahren zur Herstellung eines Sandwichverbundbauteils gemäß dem Oberbegriff des Anspruchs 13.

Ein Sandwichverbundbauteil ist eine Verbundplatte, die aus einer steifen und schadenstoleranten Kernschicht und zug- sowie druckfesten, steifen Deckschichten aufgebaut ist. Die Kernschicht wird in der Regel zwischen zwei Deckschichten eingebracht, wodurch ein leichtes und trotzdem steifes Bauteil entsteht. Die Verbundplatte genügt den Anforderungen allerdings im Allgemeinen nur, wenn die Klebeverbindung zwischen dem Kern und den Deckschichten auch bei extremer Beanspruchung nicht versagt. Eine auch nur lokal entstandene Ablösung der Deckschicht führt bereits zu einem hohen Verlust an Steifigkeit und Festigkeit und kann bereits der Auslöser für ein Versagen des gesamten Bauteils sein. Eine korrekte Verbindung des Schaumstoffkerns mit den Deckschichten ist deshalb von größter Wichtigkeit und ein kritischer Teil im Herstellungsprozess des Sandwichverbundbauteils. Die Verbindung des Kernmaterials mit den Deckschichten kann über ein Harzinfusionsverfahren, Harzinjektionsverfahren oder Handlaminierverfahren, insbesondere mittels Epoxidharz erfolgen.

Derartige Sandwichverbundbauteile finden beispielsweise Einsatz im Schiff-oder Bootsbau, Flugzeugbau, aber auch beispielsweise bei der Herstellung von Rotorblättern für Windkraftanlagen.

Ein üblicher Ansatz für das Herstellen derartiger, insbesondere auch faserverstärkter Verbundstrukturen umfasst das Anordnen einer Faserverstärkungseinheit innerhalb einer Form, gefolgt vom Imprägnieren oder Infundieren des Aufbaus mit einem Gemisch eines Flüssigharzes oder mehrerer Flüssigharze mit Härter. Sobald das Imprägnieren oder das Infundieren des Flüssigharz-/Aushärtmittelgemisches in den Aufbau erfolgt ist, wird das Flüssigharz meist bei erhöhter Temperatur ausgehärtet, um das endgültig geformte Bauteil zu erhalten.

Problematisch bei den vorstehend beschriebenen Produktionsverfahren ist, dass genau darauf geachtet werden muss, zu der Form passende Toleranzmaße einzuhalten. Neben einer sicheren Fixierung der Teilelemente in der Form wäre insbesondere wünschenswert, das Kernmaterial in einem größeren Toleranzbereich zu verbauen.

Aus der Druckschrift DE 10 2010 002 131 A1 ist ein Verfahren zur Fertigung eines Faserverbundbauteils für Rotorblätter von Windenergieanlagen bekannt. Beim Fertigungsverfahren ist eine Form vorgegeben, in die ein Gelege mit mindestens einem Kern mit einem engen Toleranzmaß eingelegt wird. Zentraler Gedanke dabei ist, im Kernmaterial zuvor Kanäle auszubilden. Hierzu wird das Kernmaterial zumindest teilweise auf der Oberseite und auf der Unterseite ausgefräst, wobei auch eine Verbindung zwischen den Kanalabschnitten auf der Oberseite und denen auf der Unterseite vorgesehen ist. Die Verbindung kann eine Durchgangsbohrung im Bereich einer Überschneidung der Kanäle der Ober- und Unterseite sein. Eine Verbindung kann aber auch über die Einstellung der Kanaltiefe erfolgen. Wenn diese auf etwas größer als die Hälfte der Materialdicke eingestellt wird, werden sich im Überlappungsbereich der Kanäle von Oberseite und Unterseite automatisch Durchbrüche zwischen beiden Kanälen ergeben. Das Harz kann nun durch ein Vakuum-Injektionsverfahren den Kanälen zugeführt werden, bis das Gelege ausreichend durchtränkt ist. Durch die Verbindung an den Überschneidungen der Kanäle an der Ober- und Unterseite kann sich das Harz über die gesamte Länge des Kanals und damit entlang des gesamten Geleges gleichmäßig ausbreiten.

Des Weiteren ist aus der Druckschrift EP 1 393 892 A1 ein Sandwichverbundbauteil bekannt, das im Kern ein flächenförmiges Strukturelement aus einer Mehrzahl von in einer Ebene nebeneinander angeordneten und miteinander verbundenen Segmenten aus geschäumtem Kunststoff enthält. Die Segmente sind an ihren aneinanderstoßenden Seitenflächen durch flächige Schweißnähte miteinander verschweißt. Dabei bilden die flächigen Schweißnähte eine porenarme oder porenfreie Kunststoffzwischenschicht in Form einer netzartigen, versteifend wirkenden Stegstruktur aus. Zur Formpassung bei der Herstellung eines Sandwichverbundbauteils muss das Strukturelement auf ein genau vorgegebenes Endmaß zurechtgesägt werden.

In der Druckschrift EP 1 821 271 A1 ist eine bieg- oder aufrollbare Stellwand aus einem Kern aus kompaktem oder schaumförmigem Material beschrieben. Bei der Stellwand handelt es sich um ein Verbundbauteil aus einem zwischen Deckschichten angeordneten kompakten Kern. Durch das Deckmaterial hindurch sind bis tief in den Kern schmale Schnitte oder Kerben eingebracht. Auch versetzte Einschnitte, ausgehend von beiden Oberflächen des Verbundbauteils, sind bekannt. Dadurch ist es möglich, die Stellwände in einer Achse zu biegen oder aufzurollen, während in der anderen Richtung die Stellwand starr ist und sich in aufrechter Stellung stabil hält.

Aufgabe der Erfindung ist, eine Kernschicht für ein Sandwichverbundbauteil sowie das Sandwichverbundbauteil der bekannten Art selbst zu verbessern. Aufgabe ist auch, ein verbessertes Verfahren zur Herstellung eines Sandwichverbundbauteils anzugeben.

Erfindungsgemäß werden diese Aufgaben mit den in den Ansprüchen 1, 12 und 13 genannten Merkmalen gelöst. Die weiteren rückbezogenen Ansprüche betreffen vorteilhafte Aus- und Weiterbildungen der Erfindung.

Die Erfindung schließt eine Kernschicht für ein Sandwichverbundbauteil ein, welche wenigstens ein flächenförmiges Kernelement mit einer ersten Hauptfläche und einer zweiten Hauptfläche und Seitenflächen aufweist. Die Kernschicht besteht aus zumindest einem flexiblen Kernelement, welches in zumindest einer Raumrichtung in seiner Längserstreckung veränderbar ausgebildet ist.

Die Erfindung geht dabei von der Überlegung aus, dass in der Kernschicht zumindest ein flexibles Kernelement angeordnet ist. Bei Verwendung eines einzelnen Kernelementes besteht die Kernschicht nur aus dem flexiblen Material. Bei einer Anordnung von mehreren Kernelementen können in der Kernschicht Kombinationen aus starren und flexiblen Bereichen entstehen. So ist eine Kernschicht als Ganzes in zumindest einer Raumrichtung in seiner Längserstreckung veränderbar aufgebaut.

Die Kernschicht setzt sich folglich aus einem Kernelement oder aus mehreren Kernelementen zusammen. Diese Kernelemente sind flächig ausgebildet und lassen sich üblicherweise ohne ungewünschte Hohlräume an ihren Seitenflächen aneinanderfügen, um die Kernschicht zu bilden. Üblicherweise sind die einzelnen Kernelemente von gleicher Dicke, so dass auch nach einem Zusammenfügen zur Kernschicht eine einheitliche Oberfläche ausgebildet ist.

Im Sinne der Erfindung kann bei einem flexiblen Kernelement folglich in erster Linie über eine elastische Verformung die Dimension verändert werden. So können die flexiblen Kernelemente über eine Formanpassung als Ausgleich von Längenabweichungen bei der Herstellung einer Kernschicht herangezogen werden. Auch plastische Verformungen sind dabei denkbar, ohne dabei die Struktur des Materials selbst wesentlich zu beeinträchtigen oder gar zu zerstören. Durch die Verformbarkeit lässt sich im Bedarfsfall die zunächst ebene Kernschicht auch auf Radius biegen, um so gerundete Formen herzustellen. Auf diese Weise können auch komplexere Formgestaltungen bei Verbundbauteilen realisiert werden.

Die Kernelemente sind folglich in zumindest einer Raumrichtung stauchbar oder dehnbar. Bei einem Stauchen oder Dehnen in einer Raumrichtung wird eine lineare Längenänderung in eine gewünschte Richtung durchgeführt. Längenänderungen in zwei Raumrichtungen entsprechen einem Stauchen oder Dehnen in der Fläche, in drei Raumrichtungen wird das gesamte Kernelement im Volumen verändert. Das elastische Verformen gleicht einem Federmechanismus oder ähnelt dem Prinzip einer Ziehharmonika. Selbstverständlich werden entsprechende Vorkehrungen zum Fixieren des gedehnten oder gestauchten elastischen Bauteils bei der Herstellung eines Sandwichverbundbauteils in einer Form getroffen. Prinzipiell von Vorteil ist bei einer Verwendung sowohl von flexiblen wie auch von starren Kernelementen, dass diese insgesamt ähnlich ausgestaltet sind, um im zusammengefügten Zustand eine in ihren Eigenschaften einheitliche Beschaffenheit der Kernschicht zu bilden. In diesem Zusammenhang sind erfindungsgemäß Harzkanäle eingebracht mit denen bei der Verarbeitung auch der Harzfluss gesteuert werden kann.

Ein wesentlicher Vorteil der erfindungsgemäßen Lösung ist der flexible Längenausgleich eines Kernelements, um form- bzw. raumfüllend zu Verbundbauteilen verarbeitet werden zu können. Oft genügt es dabei, geringe Form- oder Längenänderungen durchzuführen, um eine Kernschicht innerhalb der Toleranzbereiche zu verarbeiten. Hierbei werden Überlängen durch Stauchen und Unterlängen durch Dehnen korrigiert.

Gemäß Anspruch 1 sind erste Teilbereiche des flexiblen Kernelements starr und weitere zweite Teilbereiche in der Längserstreckung veränderbar ausgebildet. Die Kombination aus starren und flexiblen Teilbereichen von Kernelementen gibt auch die Möglichkeit, an einem Kernelement den Grad der flexiblen Verformbarkeit zu beeinflussen. Insbesondere ist dies dann von Vorteil, wenn einheitliche oder besonders ausgestaltete Strukturen auch für die Harzfließeigenschaften erwünscht sind. So kann eine Kombination aus räumlicher Flexibilität und Harzfließeigenschaft gut aufeinander abgestimmt werden.

Vorteilhafterweise sind mehrere flexible Kernelemente und starre Kernelemente flächig angeordnet, die als Ganzes ebenfalls in zumindest einer Raumrichtung in der Längserstreckung veränderbar ausgebildet sind. Bei derartigen Anordnungen kann es sich um mosaikartige Aneinanderreihungen unterschiedlicher Kernelemente handeln, bei denen an geeigneter Stelle randseitig oder auch innerhalb der Struktur flexible Elemente so angeordnet sind, dass in der Gesamtheit eine Stauchung, Dehnung oder auch ein Biegen möglich ist. Geeignete Formen können elastisch verformte Kernelemente so fixieren, dass diese über den gesamten Fertigungsweg bis zur stabilen Verbundstruktur formstabil bleiben.

In bevorzugter Ausgestaltung der Erfindung kann das zumindest eine flexible Kernelement in einer Raumrichtung parallel zu den Hauptflächen in seiner Längserstreckung veränderbar ausgebildet sein. Für flache plattenartige Kernschichten wird in erster Linie eine flexible Formgestaltung in Form einer Dehnung oder Stauchung parallel zu den Hauptflächen von Interesse sein. Bei der Verarbeitung sind die zur Verfügung stehenden Kernschichten oft nicht exakt passgenau in eine Form einzubinden. Diese Art Toleranzausgleich erleichtert ganz wesentlich den handwerklichen Gestaltungsspielraum bei der Fertigung eines Sandwichverbundbauteils.

Erfindungsgemäß weist das zumindest eine flexible Kernelement auf den Hauptflächen jeweils parallel zueinander liegende Ausnehmungen auf, die auf der ersten Hauptfläche und der zweiten Hauptfläche gegeneinander versetzt sind, wobei die Ausnehmungen der ersten Hauptfläche und der zweiten Hauptfläche in der Tiefe überlappen. Hierdurch entsteht eine Struktur, die eine Flexibilität in mehrere Raumrichtungen gewährleistet. Insbesondere im Überlappungsbereich wird dadurch ein Mehr an Hohlraum geschaffen, da dort durch die Ausnehmungen mehr Material entfernt ist. Mit anderen Worten: Dieses Mehr an Hohlräumen im Inneren eines Kernelements sorgt für die entsprechende Flexibilität der gesamten Struktur.

Bevorzugt können die jeweils parallel zueinander liegenden Ausnehmungen Nuten sein, die eine Rillung ausbilden. Parallel verlaufende Rillen in beiden Hauptflächen eines Kernelements sind Strukturen, die herstellungstechnisch leicht beherrschbar und zuverlässig herstellbar sind. Mit derartigen Rillen kann auch der Harzfluss bei der Verarbeitung zum Sandwichverbundbauteil gesteuert werden. Dennoch haben die Rillenstrukturen mechanisch gesehen von sonstigen Strukturen zur Harzverteilung andere Gestalt und so einen vollkommen abweichenden Zweck.

Vorteilhafterweise kann die aus Nuten bestehende Rillung zu mehr als 50 % überlappen. Rillungen mit einem Überlappungsbereich von mehr als 50 % bilden im Querschnitt gesehen eine Art Zickzack-Struktur aus, die besonders flexibel und auch in mehr als eine Raumrichtung verformbar ist. Diese Struktur sorgt auch dafür, dass beispielsweise bei einer moderaten Längenänderung entlang den Hauptflächen, die Dicke der Kernschicht nur unwesentlich verändert wird. Derartige oder vergleichbare Strukturen erfüllen die an Kernschichten gestellten Anforderungen hinsichtlich der mechanischen Eigenschaften sowie auch der Harzverteilung in herausragendem Maße und sind folglich für die Praxis besonders geeignet.

In bevorzugter Ausgestaltung der Erfindung können bei einer Kernschichtdicke von 15 bis 50 mm die Nuten der Rillung an der Oberfläche auf den Hauptflächen eine Breite von 2 bis 5 mm aufweisen und die Nuten in Abständen von 5 bis 20 mm aufeinanderfolgen. Hierdurch wird die Nutenbreite mit dem Restmaterial einer für die Praxis typischen Ausführungsform hinsichtlich der Flexibilität optimal aufeinander abgestimmt.

Vorteilhafterweise kann eine polygonale Form der Hauptflächen des zumindest einen Kernelements oder der Kernelemente vorliegen. Hierbei sind bevorzugt Dreiecke, Vierecke, Sechsecke und Achtecke ausgeführt, da sich derartige Kernelemente lückenlos an den Stirnflächen zu einem Ganzen zusammenfügen lassen.

Bevorzugt kann das wenigstens eine flächenförmige Kernelement aus PET bestehen. Polyethylenterephthalat (PET) ist aufgrund der Materialeigenschaften als thermoplastischer Kunststoff für die Verwendung als Kernmaterial besonders geeignet.

In einer vorteilhaften Ausführungsform können die Hauptflächen der Kernelemente unter einem spitzen Winkel so angeordnet sein, dass eine Schäftung ausgebildet ist. Damit können auch keilförmig auslaufende flexible Kernschichten in gleicher Weise zur Verfügung gestellt werden.

Ein weiterer Aspekt der Erfindung betrifft ein Sandwichverbundbauteil mit einer Kernschicht und mit einer an wenigstens einer der Hauptflächen der Kernschicht vorgesehenen Deckschicht, wobei eine Kernschicht gemäß einem der vorstehenden Ansprüche 1 bis 11 ausgebildet ist.

Die Kernschicht kann aus Schaumstoff und zudem auch aus Kork, Balsaholz oder aus einer Kombination dieser Materialien aufgebaut sein. Die Kernschicht ist in der Regel zwischen zwei Deckschichten eingebracht und mittels Harz verbunden, so dass ein leichtes und stabiles Verbundbauteil entsteht.

Ein weiterer Aspekt der Erfindung betrifft ein Verfahren zur Herstellung eines erfindungsgemäßen Sandwichverbundbauteils, mit folgenden Schritten:
- dass in einem ersten Schritt eine Form vorgesehen wird;
- dass in einem zweiten Schritt in der Form eine Kernschicht als Gelege aus einem flächenförmigen Kernelement oder einer Mehrzahl von an ihren Seitenflächen nebeneinander angeordneten flächenförmigen Kernelementen gebildet wird, wobei über das zumindest eine flexible Kernelement ein Längenausgleich zur Formfüllung durchgeführt wird;
- dass die Kernschicht an wenigstens einer ihrer beiden Hauptflächen mit einer Deckschicht versehen wird;
- dass in einem weiteren Schritt Harz, insbesondere mittels eines Harzinfusionsverfahrens, Harzinjektionsverfahrens oder Handlaminierverfahrens, zugeführt wird, bis das Gelege ausreichend durchtränkt ist und anschließend die Kernschicht mit der jeweiligen Deckschicht verbunden wird;
- dass das Harz ausgehärtet wird.

Weitere vorteilhafte Weiterbildungen und Ausgestaltungen der Erfindung ergeben sich aus den nachfolgend anhand der Zeichnungen prinzipmäßig beschriebenen Ausführungsbeispielen.

Es zeigen:
- Fig. 1: schematisch einen Querschnitt eines flexiblen Kernelements mit rechteckigen Ausnehmungen;
- Fig. 2: schematisch eine perspektivische Ansicht eines flexiblen Kernelements gemäß Fig. 1;
- Fig. 3: schematisch einen Querschnitt eines flexiblen Kernelements mit Vförmigen Ausnehmungen;
- Fig. 4: schematisch einen Querschnitt eines flexiblen Kernelements mit starren und flexiblen Teilbereichen;
- Fig. 5: schematisch eine perspektivische Ansicht eines flexiblen Kernelements mit Harzkanälen;
- Fig. 6: schematisch eine Aufsicht auf ein flexibles Kernelement gemäß Fig. 5; und
- Fig. 7: schematisch einen Querschnitt eines Sandwichverbundbauteils mit einer Kernschicht aus flexiblen und starren Kernelementen.

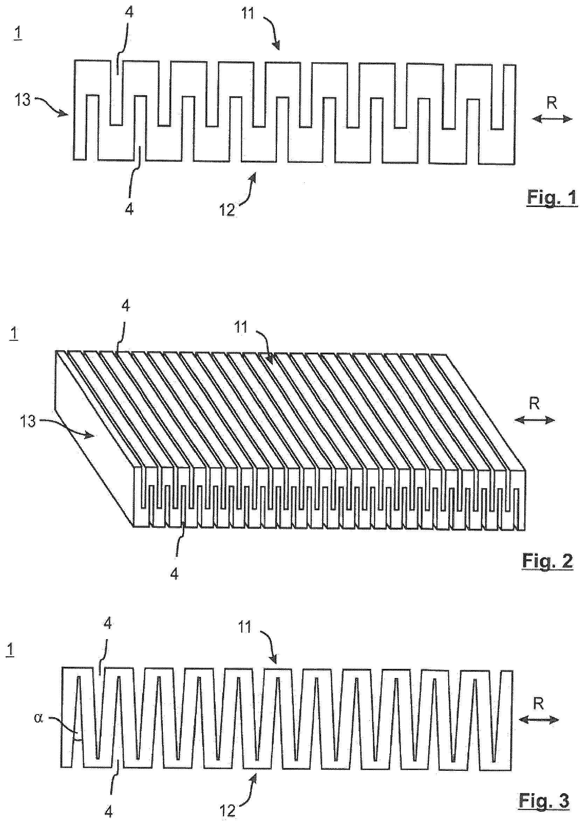

Fig. 1 zeigt schematisch einen Querschnitt eines flexiblen Kernelements 1 mit rechteckigen Ausnehmungen 4. Bei den Ausnehmungen 4 handelt es sich um jeweils parallel zueinander liegende Nuten, die eine Rillung ausbilden. In dieser Ausgestaltung überlappen die Nuten der ersten Hauptfläche 11 und die Nuten der zweiten Hauptfläche 12 nur zu einem gewissen Maße. Diese Überlappung reicht jedoch bereits aus, dass im Überlappungsbereich die Reststege die erforderliche Flexibilität zum Stauchen und Dehnen senkrecht zu den Stirnseiten 13 zur Verfügung stellen. Der Doppelpfeil R gibt in den Figuren jeweils die bevorzugte Raumrichtung der Dehnung oder Stauchung des Kernelements 1 wieder.

Fig. 2 zeigt schematisch eine perspektivische Ansicht eines in Fig. 1 dargestellten flexiblen Kernelements 1. Die durch die Nuten als Ausnehmungen 4 gebildete parallele Rillung zieht sich im Kernelement 1 durch die gesamte Oberfläche der ersten Hauptfläche 11. Ebenso verläuft die parallele Rillung auf der nicht sichtbaren Unterseite. Die Seitenflächen 13 sind dagegen glatt. Mit einer derartigen Struktur kann das Kernelement 1 in einer Raumrichtung in seiner Längserstreckung gestaucht oder gedehnt werden oder auch auf Radius gebogen werden.

Fig. 3 zeigt schematisch einen Querschnitt eines flexiblen Kernelements 1 mit V-förmigen Ausnehmungen 4. Die größte Öffnungsweite der Ausnehmung 4 befindet sich an der Oberfläche der ersten Hauptfläche 11 und der zweiten Hauptfläche 12. In diesem Fall findet eine extrem starke Überlappung der Strukturen auf Ober- und Unterseite von nahezu 90 % statt. Hierdurch ist ein Kernelement 1 ausgestaltet, das einer Ziehharmonika gleich sehr große Stauchungen und Dehnungen ausführen kann. Derartige Ausführungsformen sind für einen besonders großen Längenausgleich geschaffen.

Eine Bemaßung der schematischen Darstellung zeigt, dass das Kernelement 1 eine Dicke von ungefähr 26 mm aufweist. Die Nuten der V-förmigen Rillung haben an der Oberfläche der Hauptflächen 11 und 12 eine Breite von ungefähr 3 mm. Die Nuten folgen in Abständen von 10 mm aufeinander. Auch ist die Zickzack-Struktur mit abwechselnd auf- und abwärts gerichteten Schenkeln zu erkennen. Im unverformten Zustand schließen jeweils benachbarte Schenkel einen Winkel von bevorzugt 5° bis 15° ein. Im vorliegenden Beispiel beträgt der Winkel um die 10°.

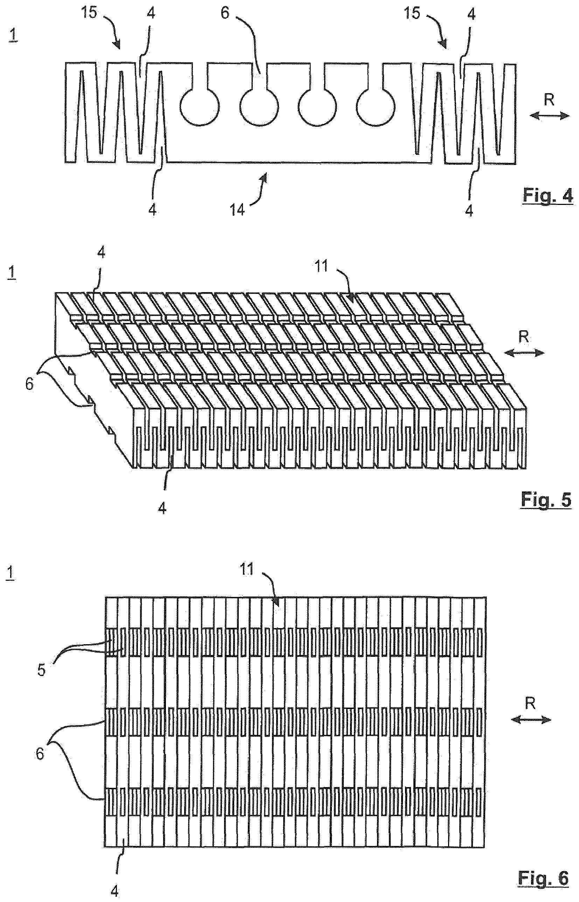

Fig. 4 zeigt schematisch einen Querschnitt eines flexiblen Kernelements 1 mit einem starren ersten Teilbereich 14 und zwei flexiblen zweiten Teilbereichen 15. Die Anordnung der flexiblen Teilbereiche schafft besonders an den beiden Enden die Möglichkeit, an einem Kernelement den Grad der flexiblen Verformbarkeit zu beeinflussen. Die flexiblen zweiten Teilbereiche 15 sind wiederum, wie in Fig. 3, mit V-förmigen Ausnehmungen 4 ausgestaltet. Der starre erste Teilbereich 14 ist mit Harzkanälen 6 ausgeführt, die im Inneren des Kernelements 1 eine Verdickung aufweisen. Hierdurch entsteht mit dem zur Herstellung von Sandwichverbundbauteilen verwendeten Harzmaterial zum Stoffschluss zudem auch ein besonders guter Formschluss.

Fig. 5 zeigt schematisch eine perspektivische Ansicht eines flexiblen Kernelements 1 mit Harzkanälen 6. Die Harzkanäle 6 verlaufen auf beiden Oberflächen in diesem Fall quer zu den Ausnehmungen 4. Auf der ersten Hauptfläche 11 ist gut zu erkennen, wie sich die Ausnehmungen 4 und die Harzkanäle 6 senkrecht schneiden.

Fig. 6 zeigt schematisch eine Aufsicht auf ein flexibles Kernelement 1 gemäß Fig. 5. In diesem Fall sind die Harzkanäle 6 so tief eingesenkt, dass quasi die Ausnehmungen 4 auf der Unterseite angeschnitten werden. Dabei entsteht ein Durchbruch 5, der bei der Herstellung von Sandwichverbundbauteilen als Durchtrittsstelle für das flüssige Harz dient. So kann eine Kombination aus räumlicher Flexibilität und Harzfließeigenschaft gut aufeinander abgestimmt werden.

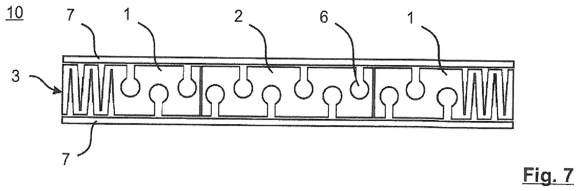

Fig. 7 zeigt schematisch einen Querschnitt eines Sandwichverbundbauteils 10 mit einer Kernschicht 3 aus flexiblen Kernelementen 1 und einem starren Kernelement 2. Die drei Kernelemente 1 und 2 bilden die Kernschicht 3, die zwischen zwei Deckschichten 7 zu liegen kommt. Zudem sind wiederum Harzkanäle 6 eingebracht. Die im Querschnitt dargestellten Hohlräume zwischen den Deckschichten 7 sind in der Praxis mit Harz ausgefüllt, das bei der Herstellung flüssig in die Struktur eingebracht und anschließend thermisch ausgehärtet wird.

### Bezugszeichenliste:

- 1: flexibles Kernelement
- 11: erste Hauptfläche
- 12: zweite Hauptfläche
- 13: Seitenflächen
- 14: erster Teilbereich
- 15: zweiter Teilbereich
- 2: starres Kernelement
- 3: Kernschicht
- 4: Ausnehmungen
- 5: Durchbruch
- 6: Harzkanäle
- 7: Deckschicht
- 10: Sandwichverbundbauteil
- R: der Doppelpfeil gibt die Raumrichtung der Dehnung oder Stauchung wieder

## Patentansprüche

1. Kernschicht (3) für ein Sandwichverbundbauteil (10), welche wenigstens ein flächenförmiges Kernelement (1, 2) mit einer ersten Hauptfläche (11) und einer zweiten Hauptfläche (12) und Seitenflächen (13) aufweist, wobei zumindest ein flexibles Kernelement (1) in zumindest einer Raumrichtung in seiner Längserstreckung veränderbar ausgebildet ist, wobei erste Teilbereiche (14) des flexiblen Kernelements (1) starr und zweite Teilbereiche (15) in der Längserstreckung veränderbar ausgebildet sind,
wobei das zumindest eine flexible Kernelement (1) auf beiden Hauptflächen (11, 12) jeweils parallel zueinander liegende Ausnehmungen (4) aufweist, die auf der ersten Hauptfläche (11) und der zweiten Hauptfläche (12) gegeneinander versetzt sind, wobei sich die Ausnehmungen (4) der ersten Hauptfläche (11) und der zweiten Hauptfläche (12) in der Tiefe überlappen, **dadurch gekennzeichnet, dass** Harzkanäle (6) in das flächenförmige Kernelement (1, 2) eingebracht sind.

2. Kernschicht (3) nach Anspruch 1,
**dadurch gekennzeichnet, dass**
Harzkanäle (6) in den starren Teilbereich (14) des flexiblen Kernelements (1) eingebracht sind, die im Inneren des Kernelements (1) jeweils eine Verdickung aufweisen.

3. Kernschicht (3) nach Anspruch 2. 1 oder 2,
**dadurch gekennzeichnet, dass**
Harzkanäle (6) in das wenigstens eine flexible Kernelement (1) eingebracht sind, die quer zu den Ausnehmungen (4) auf beiden Oberflächen der Hauptflächen (11, 12) verlaufen.

4. Kernschicht (3) nach einem der Ansprüche 1 bis 3, **dadurch gekennzeichnet, dass**
mehrere flexible Kernelemente (1) und starre Kernelemente (2) flächig angeordnet sind, die als Ganzes ebenfalls in zumindest einer Raumrichtung in der Längserstreckung veränderbar ausgebildet sind.

5. Kernschicht (3) nach Anspruch 1
**dadurch gekennzeichnet, dass**
die jeweils parallel zueinander liegenden Ausnehmungen (4) Nuten sind, die eine Rillung ausbilden.

6. Kernschicht nach Anspruch 5,
**dadurch gekennzeichnet, dass**
die Nuten V-förmig ausgestaltet sind.

7. Kernschicht nach den Ansprüchen 5 oder 6,
**dadurch gekennzeichnet, dass**
die Nuten eine Zickzack-Struktur mit abwechselnd auf- und abwärts gerichtetem Schenkel bilden.

8. Kernschicht (3) nach einem der Ansprüche 5 bis 7,
**dadurch gekennzeichnet, dass**
die aus Nuten bestehende Rillung zu mehr als 50 % überlappt.

9. Kernschicht (3) nach einem der Ansprüche 1 bis 8,
**gekennzeichnet durch**
eine polygonale Form der Hauptflächen (11, 12) des zumindest einen Kernelements (1) oder der Kernelemente (1, 2).

10. Kernschicht (3) nach einem der Ansprüche 1 bis 9
**dadurch gekennzeichnet, dass**
das wenigstens eine flächenförmige Kernelement (1, 2) aus PET besteht.

11. Kernschicht (3) nach einem der Ansprüche 1 bis 10,
**dadurch gekennzeichnet, dass**
die Hauptflächen (11, 12) der Kernelemente (1, 2) unter einem spitzen Winkel so angeordnet sind, dass eine Schäftung ausgebildet ist.

12. Sandwichverbundbauteil (10) mit einer Kernschicht (3) gemäß einem der vorstehenden Ansprüche 1 bis 11 und mit einer an wenigstens einer der Hauptflächen der Kernschicht (3) vorgesehenen Deckschicht (7).

13. Verfahren zur Herstellung eines Sandwichverbundbauteils (10) gemäß Anspruch 12,
**dadurch gekennzeichnet,**
- **dass** in einem ersten Schritt eine Form vorgesehen wird;
- **dass** in einem zweiten Schritt in der Form eine Kernschicht (3) als Gelege aus einem flächenförmigen Kernelement (1) oder einer Mehrzahl von an ihren Seitenflächen (13) nebeneinander angeordneten flächenförmigen Kernelementen (1, 2) gebildet wird, wobei über das zumindest eine flexible Kernelement (1) ein Längenausgleich zur Formfüllung durchgeführt wird;
- **dass** die Kernschicht (3) an wenigstens einer ihrer beiden Hauptflächen mit einer Deckschicht (7) versehen wird;
- **dass** in einem weiteren Schritt Harz, insbesondere mittels eines Harzinfusionsverfahrens, Harzinjektionsverfahrens oder Handlaminierverfahrens, zugeführt wird, bis das Gelege ausreichend durchtränkt ist und anschließend die Kernschicht (3) mit der jeweiligen Deckschicht (7) verbunden wird;
- **dass** das Harz ausgehärtet wird.

## Claims

1. Core layer (3) which is intended for a sandwich composite component (10) and has at least one sheet-form core element (1, 2) with a first main surface (11) and a second main surface (12) and side surfaces (13), wherein at least one flexible core element (1) is designed such that it can be altered along its longitudinal extent in at least one direction in space, wherein first sub-regions (14) of the flexible core element (1) are of rigid design and second sub-regions (15) are designed such that they can be altered along the longitudinal extent, wherein the at least one flexible core element (1), on both main surfaces (11, 12), has respectively parallel recesses (4), which are offset in relation to one another on the first main surface (11) and the second main surface (12), wherein the recesses (4) of the first main surface (11) and of the second main surface (12) overlap in terms of depth,
**characterized in that**
resin channels (6) are incorporated in the sheet-form core element (1, 2).

2. Core layer (3) according to Claim 1,
**characterized in that**
the rigid sub-region (14) of the flexible core element (1) incorporates resin channels (6) which each have a thickened portion in the interior of the core element (1).

3. Core layer (3) according to Claim 1 or 2,
**characterized in that**
the at least one flexible core element (1) incorporates resin channels (6) which run transversely to the recesses (4) on both upper faces of the mains surfaces (11, 12).

4. Core layer (3) according to one of Claims 1 to 3,
**characterized in that**
a plurality of flexible core elements (1) and rigid core elements (2) are arranged in a planar manner and, as a whole, are likewise designed such that they can be altered along the longitudinal extent in at least one direction in space.

5. Core layer (3) according to Claim 1,
**characterized in that**
the respectively parallel recesses (4) are grooves which form a fluting arrangement.

6. Core layer according to Claim 5,
**characterized in that**
the grooves are of V-shaped configuration.

7. Core layer according to Claim 5 or 6,
**characterized in that**
the grooves form a zigzag structure with legs which are directed alternately upwards and downwards.

8. Core layer (3) according to one of Claims 5 to 7,
**characterized in that**
the groove-containing fluting arrangement has overlapping of more than 50%.

9. Core layer (3) according to one of Claims 1 to 8,
**characterized by**
a polygonal shape of the main surfaces (11, 12) of the at least one core element (1) or of the core elements (1, 2).

10. Core layer (3) according to one of Claims 1 to 9,
**characterized in that**
the at least one sheet-form core element (1, 2) consists of PET.

11. Core layer (3) according to one of Claims 1 to 10,
**characterized in that**
the main surfaces (11, 12) of the core elements (1, 2) are arranged at an acute angle to give a scarfing formation.

12. Sandwich composite component (10) having a core layer (3) and having a cover layer (7) which is provided on at least one of the main surfaces of the core layer (3),
**characterized by**
a core layer (3) according to one of preceding Claims 1 to 11.

13. Method for producing a sandwich composite component (10) according to Claim 12,
**characterized**
- **in that**, in a first step, a mould is provided;
- **in that**, in a second step, a core layer (3) is formed, as a laid structure, from a sheet-form core element (1), or a plurality of sheet-form core elements (1, 2) arranged one beside the other along their side surfaces (13), in the mould, wherein a length-compensation operation is carried out via the at least one flexible core element (1) in order to fill the mould;
- **in that** the core layer (3) is provided with a cover layer (7) on at least one of its two main surfaces;
- **in that**, in a further step, resin is fed, in particular by means of resin infusion, resin injection or hand lamination, until the laid structure is sufficiently saturated, and then the core layer (3) is connected to the respective cover layer (7); and
- **in that** the resin is cured.

## Revendications

1. Couche noyau (3) pour un élément composite de type sandwich (10), comprenant au moins un élément noyau planiforme (1, 2) avec une première surface principale (11) et une seconde surface principale (12) et des surfaces latérales (13), dans lequel au moins un élément noyau flexible (1) est agencé de manière modifiable dans son extension longitudinale dans au moins une direction de l'espace, dans lequel des premiers secteurs partiels (14) de l'élément noyau flexible (1) sont réalisés de manière rigide et des seconds secteurs partiels (15) sont réalisés de manière modifiable dans leur extension longitudinale, dans lequel l'au moins un élément noyau flexible (1) présente sur chacune des deux surfaces principales (11, 12) des évidements (4) parallèles entre eux, disposés de manière décalée les uns par rapport aux autres sur la première surface principale (11) et sur la seconde surface principale (12), dans lequel les évidements (4) de la première surface principale (11) et ceux de la seconde surface principale (12) se chevauchent en profondeur, **caractérisée en ce que** des conduits de résine (6) sont ménagés dans l'élément noyau planiforme (1, 2).

2. Couche noyau (3) selon la revendication 1, **caractérisée en ce que** des conduits de résine (6), présentant chacun une augmentation de leur section à l'intérieur de l'élément noyau (1), sont ménagés dans le secteur partiel rigide (14) de l'élément noyau flexible (1).

3. Couche noyau (3) selon la revendication 1 ou 2, **caractérisée en ce que** des conduits de résine (6) s'étendant perpendiculairement aux évidements (4) sur les deux surfaces des surfaces principales (11, 12) sont ménagés dans l'au moins un élément noyau flexible (1).

4. Couche noyau (3) selon l'une des revendications 1 à 2, **caractérisée en ce que** plusieurs éléments noyau flexibles (1) et éléments noyau rigides (2) sont disposés de manière à former une surface et sont, dans leur ensemble, également réalisés de manière modifiable dans leur extension longitudinale dans au moins une direction de l'espace.

5. Couche noyau (3) selon la revendication 1, **caractérisée en ce que** les évidements (4) disposés parallèles entre eux sont des gorges formant un rainurage.

6. Couche noyau selon la revendication 5, **caractérisée en ce que** les gorges sont réalisées en forme de V.

7. Couche noyau selon les revendications 5 ou 6, **caractérisée en ce que** les gorges présentent une structure en zigzag avec des ailes orientées alternativement vers le haut et vers le bas.

8. Couche noyau (3) selon l'une des revendications 5 à 7, **caractérisée en ce que** le rainurage composé de gorges se chevauche de plus de 50 %.

9. Couche noyau (3) selon l'une des revendications 1 à 8, **caractérisée par** une forme polygonale des surfaces principales (11, 12) de l'au moins un élément noyau (1) ou des éléments noyau (1, 2).

10. Couche noyau (3) selon l'une des revendications 1 à 9, **caractérisée en ce que** l'au moins un élément noyau planiforme (1, 2) est réalisé en PET.

11. Couche noyau (3) selon l'une des revendications 1 à 10, **caractérisée en ce que** les surfaces principales (11, 12) des éléments noyau (1, 2) sont disposées selon un angle aigu de sorte à former un emboîtement.

12. Elément composite de type sandwich (10) avec une couche noyau (3) et une couche de recouvrement (7) prévue sur au moins l'une des surfaces principales de la couche noyau (3), **caractérisée par** une couche noyau (3) selon l'une des revendications précédentes 1 à 11.

13. Procédé de fabrication d'un élément composite de type sandwich (10) selon la revendication 12, **caractérisé en ce que**,
- dans une première étape, un moule est prévu ;
- dans une deuxième étape, une couche noyau (3) est disposée dans le moule pour former une nappe constituée d'un élément noyau planiforme (1) ou d'une pluralité d'éléments noyau planiformes (1, 2) disposés côte à côte par leurs surfaces latérales (13), une compensation de la longueur étant réalisée au moyen de l'au moins un élément noyau flexible (1) pour assurer le remplissage du moule ;
- la couche noyau (3) est munie sur au moins l'une de ses deux surfaces principales d'une couche de revêtement (7) ;
- dans une autre étape, de la résine est apportée notamment par un procédé d'infusion de résine, d'injection de résine ou de stratification manuelle, jusqu'à ce que la nappe soit suffisamment imprégnée et que la couche noyau (3) soit liée à la couche de revêtement (7) ;
- la résine est durcie.
